# EUROPÄISCHE PATENTANMELDUNG

(11) **EP 1 203 934 A2**
(43) Veröffentlichungstag der Anmeldung: **08.05.2002**
(21) Anmeldenummer: 01125627.8
(22) Anmeldetag: 26.10.2001
(51) Int. Cl.: G01F 23/24

(54) **Füllstandssensor und Verfahren zum Betreiben eines Füllstandssensors**

(30) Priorität: 27.10.2000 DE 10053592
(71) Anmelder: SIEMENS AKTIENGESELLSCHAFT, 80333 München (DE)
(72) Erfinder: Petzold, Sven, 65191 Wiesbaden (DE)

(57) **Zusammenfassung**

Der aus zwei räumlich ausgedehnten Elektrodenpaaren (4, 5) bestehende Füllstandssensor (1) erstreckt sich mindestens über die untere Hälfte eines Behälters (2), wobei die zwei Elektrodenpaare (4, 5) über jeweils eine Teilhöhe des Behälters (2) ausgebildet sind. Die von den Elektrodenpaaren (4, 5) gemessenen elektrischen Größen werden einer Auswerteeinheit (7) zugeführt und durch Vergleich der gemessenen Werte untereinander oder mit Sollwerten in ein dem Füllstand entsprechendes elektrisches Signal umgewandelt, welches anschließend zur Anzeige gebracht wird.

## Beschreibung

Gegenstand der Erfindung ist ein Füllstandssensor für einen Behälter, vorzugsweise für einen Waschwasserbehälter in einem Kraftfahrzeug, sowie ein Verfahren zum Betreiben des Füllstandssensors.

Es ist bekannt, in Kraftfahrzeugen angeordnete Waschwasserbehälter mit Füllstandsanzeigen auszurüsten, um dem Fahrer Informationen über den Füllstand im Waschwasserbehälter zu geben. Derartige Füllstandsanzeigen können entweder als Restmengenanzeiger oder als Anzeiger des aktuellen Füllstandes ausgebildet sein. Während im ersten Fall ein Sensor in Bodennähe des Waschwasserbehälters angeordnet ist, sind im letzteren Fall mehrere Sensoren über die Behälterhöhe verteilt angeordnet.

Neben der Vielzahl verwendeter Sensoren sind auch aus je zwei Elektroden bestehende Sensoren bekannt, wobei zwischen den beiden Elektroden verschiedene elektrische Größen, z.B. Leitwert und Widerstand, meßbar sind. Über den Wert der gemessenen Größe läßt sich eine Aussage gewinnen, ob sich dieser Sensor innerhalb oder außerhalb der Flüssigkeit befindet. Auf diese Weise kann der Füllstand über diskrete Messungen bestimmt werden. Die Anzahl der eingesetzten Sensoren bestimmt das Auflösungsvermögen der Füllstandsanzeige. Um ein hohes Auflösungsvermögen zu erhalten, ist eine Vielzahl von Sensoren notwendig. Neben der aufwendigen Montage sind die Kosten für eine derartige Meßvorrichtung wesentlich höher als bei einem Restmengenanzeiger, der nur einen Sensor benötigt. Der Nachteil von Restmengenanzeigen liegt jedoch in dem geringen Informationsgehalt dieser Anzeige. So erhält der Fahrer erst beim Unterschreiten der Restmenge eine Information über den Füllstand im Waschwasserbehälter. Unter ungünstigen Umständen, z.B. bei langen Fahrten, kann es daher zu einem Ausfall der Scheibenwaschanlage kommen.

Aufgabe der vorliegenden Erfindung ist es, einen einfach gebauten und leicht zu montierenden Füllstandssensor zu schaffen, um den Füllstand in einem Behälter zu erfassen. Der Füllstand soll dabei zuverlässig vom Sensor erfaßt werden. Weiterhin ist ein Verfahren zum Betreiben eines derartigen Füllstandssensors anzugeben.

Gelöst wird die Aufgabe mit den Merkmalen der Ansprüche 1 und 9. Vorteilhafte Ausgestaltungen sind in den Unteransprüchen beschrieben.

Der Füllstandssensor besteht aus zwei einzelnen Sensoren. Jeder Sensor ist als ein räumlich ausgedehntes Elektrodenpaar ausgebildet. Die beiden Sensoren sind so angeordnet, daß die wirksamen Meßflächen der beiden Elektrodenpaare im wesentlichen die gesamte Behälterhöhe, mindestens jedoch die untere Hälfte des Behälters abdecken, wobei sich jedes Elektrodenpaar über je eine Teilhöhe im Behälter erstreckt. Nach dem erfindungsgemäßen Verfahren wird an jedem Elektrodenpaar dieselbe elektrische Größe, z.B. Strom, Leitwert oder Widerstand, gemessen und einer Auswerteeinheit zugeführt. Da die geometrischen Abmessungen des Füllstandssensors bekannt sind, lassen sich aus den gemessenen Werten Rückschlüsse dahingehend ziehen, wie weit jeder der beiden Sensoren in die Flüssigkeit eingetaucht ist. Weiterhin können die gemessenen Werte untereinander, mit Null, bzw. einem Schwellenwert oder mit Sollwerten, die in der Auswerteeinheit abgespeichert sind, verglichen werden. Dadurch lassen sich die drei Füllstände "voll", "leer" und der Bereich, in dem beide Sensoren den geringsten Abstand zueinander haben, besonders exakt und leicht ermitteln. Nach der Auswertung der gemessen Werte wird in der Auswerteeinheit ein dem Füllstand entsprechendes elektrisches Signal gebildet, welches danach einer Anzeigeeinheit zugeführt werden kann.

Unter Umständen ist die Ausbildung des Füllstandssensors in der unteren Hälfte des Behälters bereits ausreichend, da dieser Bereich in Bezug auf den Füllstand und ein damit verbundenes Nachfüllen der interessierende Bereich ist. In dieser Ausgestaltung ist der Füllstandssensor kleiner und damit leichter und kann somit kostengünstiger hergestellt und montiert werden.

Der erfindungsgemäße Füllstandssensor hat die entscheidenden Vorteile, daß er über einen sehr einfachen und robusten Aufbau verfügt. Dadurch ist der Füllstandssensor kostengünstig herzustellen. Infolge der Unterteilung der wirksamen Meßfläche in ein oberes und unteres Elektrodenpaar sind bereits mit zwei Sensoren drei Füllstände exakt ermittelbar. Neben der exakten Bestimmung der drei obengenannten Füllstände, die für viele Anwendungen bereits ausreichend ist, ermöglicht das erfindungsgemäße Verfahren eine noch höhere Auflösung des Füllstandes. Da die geometrischen Abmessungen der Meßflächen bekannt sind, lassen sich die gemessenen Werte an den beiden Sensoren nach einem Vergleich miteinander oder abgespeicherten Sollwerten einem bestimmten Füllstand zuordnen, der anschließend zur Anzeige gebracht wird.

Der erfindungsgemäße Füllstandssensor gestaltet sich sehr einfach, wenn die Elektrodenpaare der beiden Sensoren auf einem gemeinsamen Träger angeordnet sind. Diese Ausgestaltung ermöglicht sowohl eine leichte Montage als auch eine leichte Auswechselbarkeit des Füllstandssensors im Behälter.

In einer anderen Ausführungsform ist die Trennung des oberen und des unteren Elektrodenpaares in dem Bereich angeordnet, der einem halb gefüllten Behälter entspricht. Auf diese Weise läßt sich neben den beiden Füllständen "voll" und "leer, bzw. Reserve" der Füllstand "1/2" sehr exakt durch Vergleich der von den beiden Elektrodenpaaren gemessenen Werte ermitteln. Das geschieht sehr einfach dadurch, indem am unteren Elektrodenpaar ein bestimmter Wert und am oberen Elektrodenpaar kein oder ein nicht mehr relevanter Wert gemessen wird. Diese in der Auswerteeinheit zu vollziehenden Vergleiche zeigen an, daß der obere Sensor gerade aus der Flüssigkeit herausgetaucht ist und sich demzufolge das Flüssigkeitsniveau bei "1/2" befinden muß.

Es kann aber auch sinnvoll sein, die Trennung der beiden Elektrodenpaare in einen anderen Bereich, z.B. den des zu einem Viertel gefüllten Behälters, zu legen. Diese Anordnung ist insbesondere dann von Vorteil, wenn der Füllstand mit "1/4" und "leer" verstärkt im Restmengenbereich mit wenig Aufwand exakt ermittelt werden soll. Speziell in dieser Ausgestaltung können die vom unteren Elektrodenpaar gemessenen Werte zur Interpretation aller Werte dienen und somit zusätzliche Referenzeinrichtungen überflüssig machen.

Der erfindungsgemäße Füllstandssensor kann sowohl in eine Öffnung des Behälters eingesetzt als auch direkt an einer Behälterwandung befestigt werden. Es ist aber auch denkbar, die Elektrodenpaare als zwei Baueinheiten anzuordnen und anschließend durch die Verschaltung zu einem Füllstandssensor zusammenzufassen. Dies ist insbesondere bei einem Ausfall eines Elektrodenpaares von Vorteil, da nur das betroffene Elektrodenpaar ausgetauscht werden muß. Das andere Elektrodenpaar muß nicht demontiert werden und kann im Behälter verbleiben. Hierbei eignet sich das erfindungsgemäße Verfahren gleichzeitig als Prüfverfahren für die beiden Elektrodenpaare. So kann ein Ausfall eines Elektrodenpaares beispielsweise durch Ablagerungen auf der wirksamen Meßfläche hervorgerufen werden. Indem bei vollem Behälter die Meßwerte der beiden Elektrodenpaare miteinander verglichen werden, zeigt eine Differenz zwischen beiden Meßwerten einen beginnenden Ausfall eines Elektrodenpaares an, die gleiche Meßfläche an beiden Elektrodenpaaren vorausgesetzt. In einer anderen Verfahrensvariante werden die an beiden Elektrodenpaaren gemessenen Werte bei vollem Behälter mit Sollwerten verglichen, um so auf einen möglichen Ausfall hindeutende Abweichungen zu erkennen. Das letztere Verfahren kommt dann zur Anwendung, wenn die Meßflächen der beiden Elektrodenpaare unterschiedlich sind und/oder beide Meßflächen bereits Ablagerungen aufweisen.

Die Erfindung läßt mehrere Ausführungsformen zu. An einigen Beispielen werden diese nachfolgend beschrieben. Dabei zeigen
- Figur 1:: den erfindungsgemäßen Füllstandssensor in einem Waschwasserbehälter eines Kraftfahrzeugs,
- Figur 2a - c:: weitere Ausgestaltungen des Füllstandssensors in Behältern mit verschiedenen Füllständen.

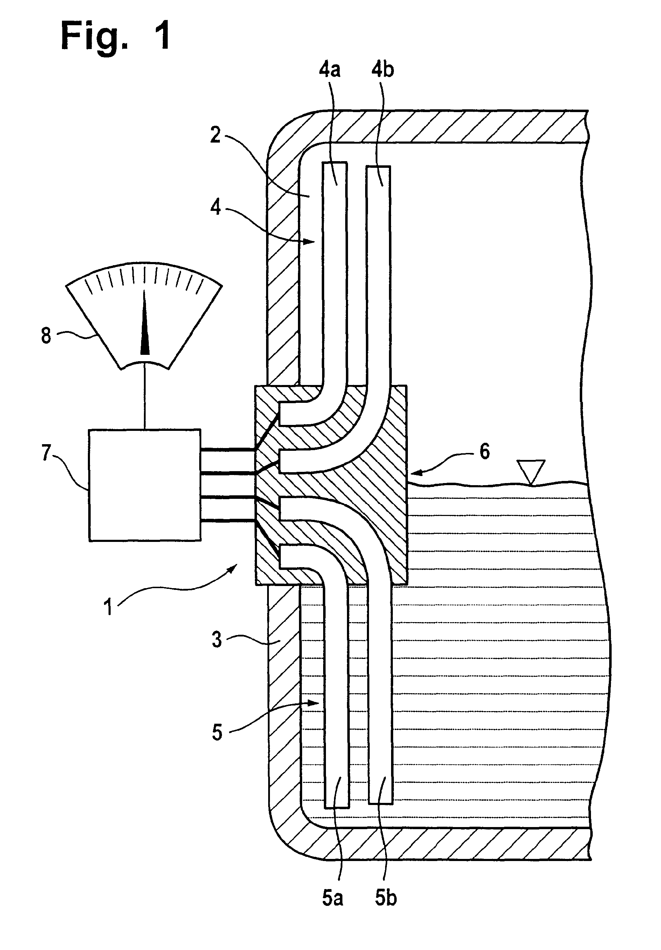

Der in Figur 1 gezeigte Füllstandssensor 1 ist in einem Behälter 2 für Waschflüssigkeit an einer Seitenwand 3 angeordnet. Der Füllstandssensor 1 besitzt zwei Elektrodenpaare 4, 5. Die Elektrodenpaare 4, 5 bestehen aus je zwei Edelstahlelektroden 4a, b; 5a, b. Während sich das Elektrodenpaar 4 entlang der Seitenwand 3 nach oben erstreckt, reicht das Elektrodenpaar 5 bis nahe an den Behälterboden. Damit erstrecken sich die wirksamen Meßflächen des Füllstandssensors 1 im wesentlichen über die gesamte Behälterhöhe. Der Füllstandssensor 1 ist dabei so an der Seitenwand 3 angeordnet, daß das Flüssigkeitsniveau eines zur Hälfte gefüllten Behälters 2 im Bereich 6 der Trennung der beiden Elektrodenpaare 4, 5 liegt. Nach außen ist der Füllstandssensor 1 mit einer Auswerteeinheit 7 verbunden, in der die von den Elektrodenpaaren 4, 5 gemessenen Werte miteinander verglichen werden, um daraus ein dem Füllstand entsprechendes elektrisches Signal zu bilden. Dieses Signal wird anschließend einer Anzeigeeinheit 8 zugeführt. Aufgrund der in diesem Ausführungsbeispiel gleich großen Meßflächen beider Elektrodenpaare 4, 5 lassen sich die Füllstände "voll", "1/2", "leer" besonders einfach durch qualitatives Vergleichen der Signale der Elektrodenpaare 4, 5 in der Auswerteeinheit 7 ermitteln. Liegt an beiden Elektrodenpaaren 4, 5 in etwa das gleiche Signal an, befinden sich beide Elektrodenpaare 4, 5 vollständig in der Flüssigkeit, was dem Zustand "voll" entspricht. Zu dem Moment in dem erstmalig nur am unteren Elektrodenpaar 5 ein Signal meßbar ist, ist der Behälter 2 zur Hälfte gefüllt. Liefern beide Elektrodenpaare 4, 5 kein Signal, liegt das Flüssigkeitsniveau unter dem unteren Elektrodenpaar 5, was einem Zustand "leer, bzw. Reserve" entspricht.

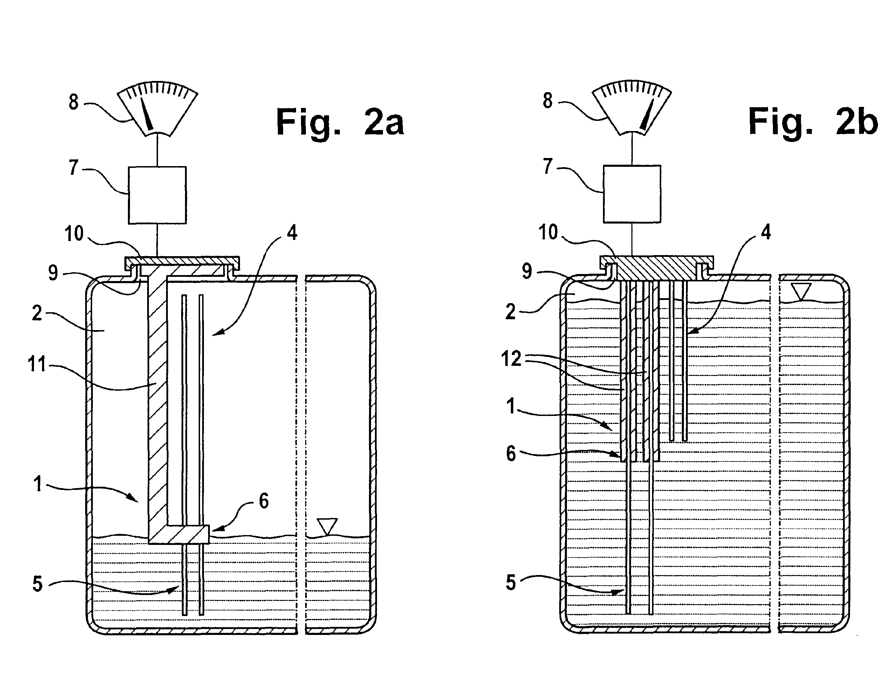

In der Figur 2a ist der Füllstandssensor 1 in einem eine Öffnung 9 des Behälters 2 verschließenden Deckel 10 angeordnet. Hierbei erstreckt sich ein Träger 11 vom Deckel 10 in den Behälter 2 hinein. Auf diesem Träger 11 sind die Elektrodenpaare 4, 5 angeordnet. Die Trennung der beiden Elektrodenpaare 4, 5 liegt in einem Bereich 6, der einem zu einem Viertel mit Flüssigkeit gefüllten Behälter entspricht. Die Ermittlung der Füllstände erfolgt analog zu Figur 1 mit dem Unterschied, daß die gemessenen Werte der beiden Elektrodenpaare 4, 5 nunmehr mit in der Auswerteeinheit 7 abgelegten Sollwerten verglichen werden müssen, da die wirksamen Meßflächen der beiden Elektrodenpaare 4, 5 ungleich sind. Bei dem in der Figur 2a dargestellten Füllstand wird am unteren Elektrodenpaar 5 ein Wert gemessen, der gleich einem Sollwert für dieses Elektrodenpaar 5 ist. Am oberen Elektrodenpaar 4 wird dagegen kein Wert gemessen, was 0% des Sollwertes für dieses Elektrodenpaar 4 entspricht. Daraus bildet die Auswerteeinheit 7 ein elektrisches Signal für den Füllstand "1/4".

In dem in Figur 2b dargestellten Behälter 2 ist der Füllstandssensor 1 ebenfalls in einem eine Öffnung 9 verschließenden Deckel 10 angeordnet. Beide Elektrodenpaare 4, 5 erstrecken sich vom Deckel 10 aus nach unten. Das Elektrodenpaar 4 reicht bis in eine Höhe, die einem halb gefüllten Behälter entspricht, während das Elektrodenpaar 5 bis zum Behälterboden ausgebildet ist. In dieser Ausführung besitzt das Elektrodenpaar 5 eine Ummantelung 12, so daß die wirksamen Meßflächen beider Elektrodenpaare 4, 5 gleich sind. Damit werden direkte Vergleiche der gemessenen Werte untereinander ermöglicht. Es ist aber auch möglich, auf die Ummantelung 12 zu verzichten. In diesem Fall erfolgt die Auswertung der gemessenen Werte ausschließlich mit zuvor in der Auswerteeinheit 7 abgelegten Sollwerten.

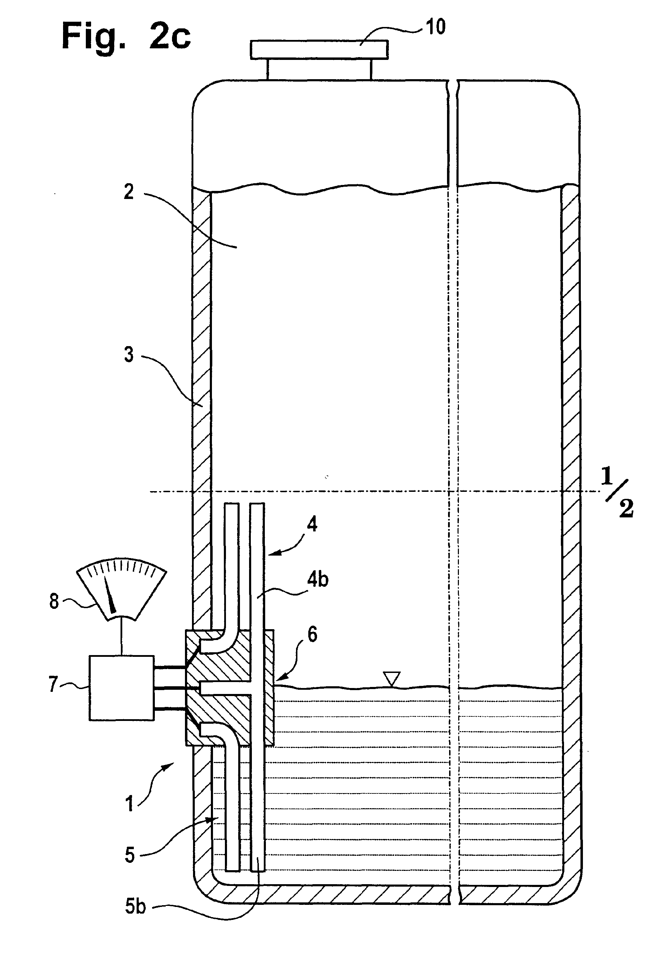

In Fig. 2c erstreckt sich der Füllstandssensor 1 nur über die untere Hälfte des Behälters 2 und die Trennung der beiden Elektrodenpaare 4, 5 liegt in dem Bereich des zu einem Viertel gefüllten Behälters 2. Je eine Elektrode 4b, 5b der beiden Elektrodenpaare 4, 5 ist zu einer gemeinsamen Elektrode zusammengefaßt. Dadurch läßt sich der Aufwand für den Füllstandssensor 1 weiter reduzieren, so daß dieser noch kostengünstiger herstellbar ist.

## Patentansprüche

1. Füllstandssensor für einen Behälter, vorzugsweise für einen Waschwasserbehälter in einem Kraftfahrzeug, mit Elektroden zur Messung elektrischer Größen und einer mit dem Füllstandssensor verbundenen Auswerteeinheit, **dadurch gekennzeichnet, daß** der Füllstandssensor (1) zwei Elektrodenpaare (4, 5) aufweist, daß sich die wirksamen Meßflächen jedes Elektrodenpaares (4a, b; 5a, b) über je eine Teilhöhe des Behälters (2) erstrecken, wobei die Meßflächen (4a, b; 5a, b) beider Elektrodenpaare (4, 5) mindestens über die untere Hälfte des Behälters (2) ausgebildet sind.

2. Füllstandssensor nach Anspruch 1, **dadurch gekennzeichnet, daß** der Füllstandssensor (1) im wesentlichen über die gesamte Behälterhöhe ausgebildet ist.

3. Füllstandssensor nach Anspruch 1 und 2, **dadurch gekennzeichnet, daß** der Füllstandssensor (1) an einer Seitenwand (3) des Behälters (2), vorzugsweise in einer Höhe, die dem Flüssigkeitsniveau des halb gefüllten Behälters (2) entspricht, angeordnet ist.

4. Füllstandssensor nach Anspruch 1 und 2, **dadurch gekennzeichnet, daß** der Füllstandssensor (1) an der Oberseite des Behälters (2), vorzugsweise in einem eine Öffnung (9) verschließenden Dekkel (10), angeordnet ist.

5. Füllstandssensor nach zumindest einem der Ansprüche 1 bis 4, **dadurch gekennzeichnet, daß** die Meßflächen (4a, b; 5a, b) der Elektrodenpaare (4, 5) aus Metall, vorzugsweise Edelstahl, sind.

6. Füllstandssensor nach zumindest einem der Ansprüche 1 bis 5, **dadurch gekennzeichnet, daß** die Auswerteeinheit (7) mit einer Anzeigevorrichtung (8) verbunden ist.

7. Füllstandssensor nach zumindest einem der Ansprüche 1 bis 6, **dadurch gekennzeichnet, daß** mindestens ein Elektrodenpaar (5) eine teilweise Ummantelung (12) besitzt.

8. Füllstandssensor nach zumindest einem der Ansprüche 1 bis 7, **dadurch gekennzeichnet, daß** je eine Elektrode (4b, 5b) der Elektrodenpaare (4, 5) zu einer gemeinsamen Elektrode zusammengefaßt sind.

9. Verfahren zur Ermittlung eines Füllstandes in einem Behälter mit einem Füllstandssensor gemäß Anspruch 1, **dadurch gekennzeichnet, daß** die von zwei Sensoren gemessenen Werte in einer Auswerteeinheit miteinander verglichen werden, und daß aus dem Vergleichswert ein dem Füllstand im Behälter entsprechendes elektrisches Signal gebildet wird.

10. Verfahren nach Anspruch 9, **dadurch gekennzeichnet, daß** der Vergleichswert durch Differenzbildung der beiden gemessenen Werte gebildet und daraus ein dem Füllstand im Behälter entsprechendes elektrisches Signal gebildet wird.

11. Verfahren nach Anspruch 9, **dadurch gekennzeichnet, daß** die gemessenen Werte mit in der Auswerteeinheit hinterlegten Sollwerten verglichen werden und daraus ein dem Füllstand im Behälter entsprechendes elektrisches Signal gebildet wird.

12. Verfahren nach Anspruch 9 bis 11, **dadurch gekennzeichnet, daß** der Strom, der Widerstand oder der Leitwert der Flüssigkeit gemessen wird.
